# EUROPEAN PATENT SPECIFICATION

(11) **EP 2 333 032 B1**
(45) Date of publication and mention of the grant of the patent: **25.07.2018**
(21) Application number: 10194374.4
(22) Date of filing: 09.12.2010
(51) Int. Cl.: C10L 1/04, C10L 10/14

(54) **PROZESS TO PREPARE A HYDROCARBON COMPOSTION USEFUL AS FUEL OR COMBUSTILBE**
HERSTELLUNG EINER KOHLENWASSERSTOFFZUSAMMENSETZUNG VERWENDBAR ALS KRAFTSTOFF ODER BRENNSTOFF
METHODE POUR LA PREPARATION D'UNE COMPOSITION D'HYDROCARBURES CAPABLE COMME CARBURANT ET COMBUSTIBLE

(30) Priority: 09.12.2009 IT MI20092163
(43) Date of publication of application: 15.06.2011
(73) Proprietor: ENI S.p.A., 00144 Rome (IT)
(72) Inventor: Guanziroli, Silvia, 20052, MONZA (MB) (IT); Baldiraghi, Franco, 20077, MELEGNANO (MI) (IT); Rispoli, Giacomo Fernando, 00136, ROMA (IT)
(74) Representative: Bottero, Carlo

(56) References cited:
- WO-A1-2007/068795
- WO-A1-2008/058664
- WO-A1-2008/113492
- LAPPAS A A ET AL: "Production of biofuels via co-processing in conventional refining processes", CATALYSIS TODAY, ELSEVIER, NL LNKD- DOI:10.1016/J.CATTOD.2008.07.001, vol. 145, no. 1-2, 15 July 2009 (2009-07-15), pages 55-62, XP026159255, ISSN: 0920-5861 [retrieved on 2008-09-02]
- G.J. SUPPES: "Compression-Ignition Fuel Properties of Fischer-Tropsch Syncrude", IND. ENG. CHEM. RES., vol. 37, 31 March 1998 (1998-03-31), pages 2029-2038, XP002588287,
- KALNES TOM ET AL: "Green Diesel: A Second Generation Biofuel", INTERNET CITATION, 1 January 2007 (2007-01-01), pages 1-11, XP002534950, ISSN: 1542-6580 Retrieved from the Internet: URL:http://www.bepress.com/ijcre/vol5/A48 [retrieved on 2009-07-01]

## Description

The present invention relates to a new process for preparing a hydrocarbon composition, and its use as fuel or combustible.

The addition of alkyl esters of fatty acids to compositions of diesel fuel in order to reduce the environmental impact deriving from the use of conventional fuels of a petroleum origin, is known. The addition of these compounds of a biological origin, however, can cause a deterioration in the quality of the resulting mixture, due to the fact that these compounds create problems of instability linked to the presence of unsaturations in addition to a reduced energy content per mass unit and also problems relating to the entrainment of water, due to their hydrophilic nature, and fouling, with a potentially negative effect on present-day diesel engines and fuel and combustible distribution systems in general.

EP 1674552 describes a diesel composition containing a diesel base and a palm oil alkyl ester (POAE) wherein the addition of the alkyl ester, in a concentration of up to 25% v/v with respect to the total mixture, gives the resulting composition enhanced characteristics with respect to the starting diesel base from the point of view of cold behaviour, with reference in particular to the CFPP (cold filter plugging points) parameter which is reduced by the presence of POAE.

Patent application WO2004/022674 describes a composition for diesel engines containing:
a) from 0.1 to 99% by volume of a component of a biological origin obtained by the hydrogenation and decomposition of fatty acids or esters of fatty acids giving hydrocarbons which are possibly subsequently isomerized,
b) 0-20% by volume of an oxygenated component,
both components (a) and (b) being mixed with a diesel component. Component (a) is preferably used in the form which has undergone isomerization and from the examples high quantities of said isomerized component (a) are necessary, from 30 to 60%, for obtaining significant variations in the cetane number.

Patent application EP 1693432 describes a hydroconversion process of a mixture containing from 1 to 75% by weight of an oil or natural fat (1) and, as the remaining part, a mineral oil (2). The process is carried out at high pressure, ranging from 4 to 10 MPa, preferably from 5 to 8 MPa.

Patent application WO 2007/003709 describes a process for the preparation of hydrocarbon blends within the diesel range, which comprises subjecting a feedstock of a biological origin containing over 5% of free fatty acids and a diluting agent selected from hydrocarbons of a biological or non-biological origin, in particular preferably a recycled product of the same process, to a first hydrotreatment step and a second isomerization step.

Patent application WO2008/058664 describes a process for producing hydrocarbon fractions which can be used as diesel fuel starting from a mixture of a biological origin containing fatty acid esters, possibly with aliquots of free fatty acids, by means of a process which comprises the following steps:
1) hydrodeoxygenation of the mixture of a biological origin;
2) hydroisomerization of the mixture resulting from step (1), after possible purification treatment, said hydroisomerization being effected in the presence of a catalytic system which comprises:
   a) a carrier of an acid nature comprising a completely amorphous micro-mesoporous silico-alumina having an SiO₂/Al₂O₃ molar ratio ranging from 30 to 500, a surface area greater than 500 m²/g, a pore volume ranging from 0.3 to 1.3 ml/g, an average pore diameter of less than 40 Å,
   b) a metallic component containing one or more metals of group VIII, possibly mixed with one or more metals of group VIB.

Patent application WO2008/113492 describes a hydrocarbon composition containing an oil component (A) and a component of a biological origin (B), wherein said component (B) is present in a quantity which reaches up to 75% v/v with respect to the total composition, and wherein said component (B) is prepared starting from a mixture of a biological origin (C) containing esters of fatty acids, possibly with aliquots of free fatty acids, by means of a process which comprises the following steps:
1) hydrodeoxygenation of the mixture of a biological origin (C) ;
2) hydroisomerization of the mixture resulting from step (1), after possible separation of the water and gas flow.

MI2008A001641 describes a hydrocarbon composition, which can be used as fuel and/or combustible, obtained by means of a process comprising a hydrodeoxygenation step of a mixture of a biological origin containing fatty acid esters, possibly with aliquots of free fatty acids, and a mixing step with a component of a petroleum origin, said mixing step optionally effected before or after the hydrodeoxygenation step.

It has now been unexpectedly found that by mixing a gasoil component, a gasoline component and a hydrocarbon component of a biological origin obtained as described above, i.e. by subjecting a mixture of a biological origin containing fatty acid esters to a treatment comprising a hydrodeoxygenation step and possibly a hydroisomerization step, a hydrocarbon composition is obtained, characterized by considerable improvements in both the cold behaviour and oxidative stability with respect to the mixture not containing gasoline, also allowing an increase in the aliquot of biocomponent, with respect to the case of the binary mixture, in compliance with the minimum density value according to specification.

An object of the present invention therefore relates to a process for preparing a hydrocarbon composition which comprises mixing:
- a gasoil component (A), in an amount from 20 to 95% by weight, deriving from the mixing of medium distillates having a boiling point ranging from 180 to 380 °C;
- a gasoline component (A1), in an amount from 1 to 40% by weight, characterized by a T95 (ASTM D86) lower than 250°C having a density ranging from 855 to 910 kg/m³;
- a hydrocarbon component of a biological origin (B), in an amount from 4 to 60% by weight,
wherein said hydrocarbon component of a biological origin (B) is obtained starting from a mixture of a biological origin (C) containing esters of fatty acids, possibly with quantities of free fatty acids, by means of a process which comprises:
1) hydrodeoxygenation step of the mixture of a biological origin, and
2) possibly a hydroisomerization step of the mixture resulting from step (1);
wherein said hydrocarbon composition is characterized by an improvement in the CFPP which varies from 0.2 to 5°C in relation to the concentration of said gasoline component (A1), and an improvement in the cloud point ranging from 0.2 to 5°C in relation to the concentration of said gasoline component (A1), with respect to the composition not containing said gasoline component (A1); and wherein said hydrocarbon component of a biological origin thus obtained has a density ranging from 750 to 800 kg/m³, a viscosity ranging from 2.00 to 4.00 cSt, a cloud point ranging from -20 to +5 °C, a sulfur content lower than 3 mg/kg, a nitrogen content lower than 3 mg/kg, an acidity lower than 0.1 mg KOH/g, a boiling range from 240 to 300 °C expressed as boiling point of 10% vol. and 90% vol. in ASTM D86, the CFPP of the component of a biological origin (B) preferably ranging from -25 to +5 °C.

When both steps are present, a purification treatment can possibly be effected between these.

The hydrocarbon composition obtained from the process object of the present invention can be conveniently used as both diesel fuel for engines and also as combustible for heating.

Gas oil components (A) used in the process of the present invention derive from the mixing of diesel cuts. The sulfur content of these diesel cuts preferably ranges from 2,000 to 50 mg/kg, and even more preferably from 50 to 3 mg/kg.

Examples of these cuts can be primary distillation gas oils, vacuum distillation gas oils, and gas oils from thermal or catalytic cracking, such as for example the desulfurated gas oil cut coming from fluid bed catalytic cracking (light cycle oil (LCO)), fuels from a Fischer-Topsch process or of a synthetic nature. Cuts obtained from these after hydrogenation treatment can also be conveniently used.

The diesel cuts which can be adopted are typically those normally used as fuels in diesel engines or as gas oil for heating.

With respect to the gasoline component (A1), gasolines characterized by a T95 (ASTM D86) not higher than 240°C can be conveniently used, wherein T95 refers to the temperature at which 95% by volume of gasoline distils. Gasolines with a T95 lower than 240°C, having a density ranging from 855 to 910 kg/m³, are preferably used.

A particular preferred aspect is for said gasolines to have a cp (cloud point, corresponding to the Cloud Point measured according to EN23015) lower than -40 °C. A further preferred aspect is for said gasolines to have a content of aromatic compounds higher than 50% by weight with respect to the total weight of the gasoline. Gasolines which can be conveniently used are those deriving from catalytic processes, preferably deriving from fluid bed catalytic processes (FCC), reforming processes, and mixtures thereof. In particular HCN gasolines are therefore used, i.e. heavy gasolines (initial boiling point 150+°C) from FCC as such or desulfurated, and gasolines called Heavy reformates, i.e. heavy gasolines (initial boiling point 150+°C) from reforming, or mixtures thereof.

The sulfur content of these gasoline cuts preferably ranges from 2,000 to 50 mg/kg, and even more preferably from 50 to 1 mg/kg.

The composition obtained by the process object of the present invention can also contain cold flow additives, detergents, lubricity improvers, antifoam agents, cetane number improvers, antirust agents, antioxidants, anti-wear agents, conductivity improvers. The concentration of each of these additives is preferably not higher than 2% w/w.

The hydrocarbon composition obtained by the process of the present invention is characterized by improvements from the point of view of cold behaviour and oxidative stability with respect to the mixture not containing gasoline, thus allowing an improvement in the CFPP which varies from 0.2 to 5°C in relation to the concentration of gasoline, and an improvement in the cloud point ranging from 0.2 to 5°C in relation to the concentration of gasoline. These improvements are higher than the expected values using mathematical calculations according to literature, for example in accordance with "New method predicts cloud, pour, flash points of distillate blends", J. Hu, A.M. Burns, Hydrocarbon Processing, November 1970, pages 213-216. Furthermore, the presence of the gasoline component allows the aliquot of biocomponent (B) to be increased with respect to the prior art in which the binary composition consisting of (A) and (B) alone is used. The CFPP is measured by means of the method EN 116 and corresponds to the temperature at which and below which the waxes contained in the fuel are separated, causing flow problems through a particular filter. The Cloud point is measured according to the method ASTM D2500.

As far as the oxidative stability is concerned, this was evaluated by means of the Rancimat EN 15751 test and proves to have improved by over 20 hours.

The compositions obtained by the process of the present invention are prepared by mixing the single components. Other possible additives present in the final composition can be introduced into both the final composition itself and also into the diesel cut, into the gasoline component or the component of a biological origin before being mixed.

The component of a biological origin (B) used in the process of the present invention is prepared starting from a mixture of a biological origin (C) containing fatty acid esters, and possibly also containing free fatty acids, by means of a process which comprises:
1) a hydrodeoxygenation step of the mixture of a biological origin;
2) possibly a hydroisomerization step of the mixture resulting from step (1), after a possible purification treatment.

The mixtures of a biological origin (C) used in this preparation process of component (B) contain fatty acid esters, possibly with aliquots of free fatty acids, and can be mixtures of a vegetable or animal origin. The aliquot of fatty acids can range, for example, from 2 to 20% by weight with respect to the total mixture of a biological origin. The fatty acid esters contained in said mixtures are typically triglycerides of fatty acids, wherein the hydrocarbon chain of the fatty acid can contain from 12 to 24 carbon atoms and can be mono- or poly-unsaturated.

The mixtures of a biological origin can be selected from vegetable oils, vegetable fats, animal fats, fish oils or mixtures thereof. Vegetable oils or fats which can be used are sunflower oil, rape oil, canola oil, palm oil, soybean oil, hemp oil, olive oil, linseed oil, peanut oil, castor oil, mustard oil, coconut oil, Jatropha oil, Virola oil or fatty oils contained in the pulp of pine trees (tall oil), or mixtures thereof. The animal oils or fats can be selected from bacon, lard, tallow, milk fats, and mixtures thereof. Recycled oils or fats of the food industry, of both an animal and vegetable origin, can also be used. The vegetable oils or fats can also derive from plants selected by genetic manipulation.

In the hydrodeoxygenation step (HDO step), the mixture of a biological origin (C) is hydrodeoxygenated with hydrogen in the presence of a hydrodeoxygenation catalyst.

Said HDO step is conveniently effected as described in WO 2008/058664 and in WO 2008/113492. In this step, the hydrogenation takes place of the double bonds present in the ester chains of the triglycerides, together with the cracking of the triglyceride structure and deoxygenation by both decarboxylation and hydrogenation with the formation of water.

The catalysts which can be used are all hydrogenation and hydrotreatment catalysts known in the art containing one or more metals selected from metals of group VIII (Fe, Co, Ni, Ru, Rh, Pd, Os, Ir, Pt) and group VIB (Cr, Mo, W) suitable supported. Carriers which are suitable for the purpose consist of one or more metallic oxides, preferably alumina, silica, titania, zirconia, or mixtures thereof. Zeolites and mixed oxides can also be conveniently used as carrier, in particular silico-aluminas of the MSA type, wherein MSA is a silico-alumina having particular characteristics, described in EP340868, EP659478, EP812804.

The metal or metals are preferably selected from Pd, Pt, Ni, or from the pairs of metals Ni-Mo, Ni-W, Co-Mo and Co-W, Ni-Mo and Co-Mo being preferred.

The metal of group VIII can be conveniently used in a quantity ranging from 0.1 to 5% by weight with respect to the total weight of the catalytic composition. The metal of group VIB can be conveniently used in a quantity ranging from 1 to 50%, even more preferably in a quantity ranging from 5 to 35% by weight with respect to the total weight of the catalytic composition. The weight percentage of the metal, or metals, refers to the content of metal expressed as metallic element in the final catalyst, after calcination, said metal is in oxide form.

These catalysts are typically prepared by impregnation of the oxide carrier with a solution of a suitable salt of the metal or metals. All techniques known to experts in the field can be used. For example, the carrier can be wet with an aqueous solution of the metal of group VIII, operating at room temperature and at a pH ranging from 1 to 4. The aqueous solution preferably has a concentration of metal expressed as g/l ranging from 0.2 to 2.0. The impregnation is then followed by a thermal treatment in an atmosphere suitable for decomposing the salt precursor and obtaining the supported metal. The resulting product can be dried, for example, preferably in air, at room temperature, and is calcined in an oxidizing atmosphere at a temperature ranging from 200 to 600°C. It is also possible to proceed with consecutive impregnations in order to reach the desired level of metal charge and also to differentiate their supporting, in the case of more than one metal.

The ion exchange technique can also be conveniently used: in this case, the carrier is suspended in an aqueous solution of a complex or metal salt, operating at room temperature and a pH of 6 to 10. After the exchange, the solid is separated, washed with water, dried and thermally treated in an inert or oxidizing atmosphere, at a temperature ranging from 200 to 600°C.

Compounds which are suitable for the above preparations are, for example: H₂PtCl₆, PdCl₂, (CH₃COO)₂Ni, (CH₃COO)₂Co.

When the catalyst contains both a metal from group VIII and a metal from group VIB, the carrier can be wet with an aqueous solution of group VIB, operating at room temperature. After the impregnation, the solid is dried and an impregnation is then effected with an aqueous solution of a compound of a metal of group VIII. The solid is then dried and treated in an oxidizing atmosphere, at a temperature ranging from 200 to 600°C. Alternatively, a single solution containing both metals can be adopted.

Processes are also well-known for the production of these catalysts, instead of by impregnation, by precipitation of the metallic precursor from a saline solution of the same metal on the carrier, or by coprecipitation of the various components of the catalyst, i.e. of the metal and carrier. Catalytic compositions such as Ni-Mo-P on zeolite can also be well used, in which the phosphorous can be introduced by impregnation, for example, and Pd/Zeolite.

Suitable catalysts which can be used are described for example in J.T. Richardson, "Principles of catalyst development", Plenum Press, New York, 1989, Chapter 6; in "Hydrotreatment and hydrocracking of oil fraction" G.F. Froment, B. Del Mon, P. Grange, page 195, Elsevier (1997); in J. Scherzer, A.J. Gruia, Hydrocracking Science and Technology, Marcel Dekker N.Y. 1996, Chapters 4 and 5.

The catalysts of the type Ni-Mo, Ni-W, Co-Mo and Co-W preferably previously undergo sulfidation.

The pre-sulfidation procedures are effected according to the known techniques. In particular, the sulfidation can be carried out "ex situ" or "in situ", i.e. in the same reactor in which the HDO step is subsequently effected. The sulfidation process can be carried out in a reducing atmosphere, consisting for example of H₂S and hydrogen, or CS₂ and hydrogen, at a high temperature, for example ranging from 300° to 500 °C, for a period of time sufficient for sulfiding the catalyst, for example from 1 to 100 hours. Or, the sulfidation can also be carried out using dimethyl disulfide fed contemporaneously with the feedstock of a biological origin, after a possible purification step of said feedstock, with a content from 0.02 to 0.5% by weight (140-3400 ppm S). Alternatively, a straight-run gas oil with a high S content (S >1%), can be co-fed, in a concentration which is such as to sight the same overall S content in the feedstock. Sulfidation techniques which can be conveniently used are also described, for example, in "Petroleum Refining", J.H. Gary,G.E. Handwerk, M.Dekker Ed.1994.

The HDO reaction is carried out in a reaction zone comprising one or more catalytic beds, in one or more reactors. According to a preferred aspect, it is carried out in a typical fixed bed hydrotreating reactor. The flow of hydrogen and feedstock of biological origin (C) can be sent in equicurrent or countercurrent. The reactor can have adiabatic catalytic beds in a number higher than or equal to 2. As this is an exothermic reaction, with the production of heat, there will be a temperature rise in each catalytic bed. By feeding, between one catalytic bed and another, a stream of hydrogen and/or liquid feedstock, at a certain temperature, it will be possible to obtain a constant or increasing temperature profile. This operating mode is normally indicated as "splitted feed".

For a better regulation of the thermal profile in the reactor whether it is with adiabatic layers or tube bundle, the reactor itself can be run with the recirculation of a part of the effluents, according to the typology known as recycling reactor. The function of the recycling will be to dilute the fresh feedstock in the reactor thus limiting the thermal peaks due to the exothermicity of the reaction. The recycling ratio, i.e. the amount of recirculated fraction with respect to the fresh feedstock can vary from 0.5 to 5 w/w.

The HDO step is preferably carried out at a pressure varying from 25 to 70 bar, preferably from 30 to 50 bar, and at a temperature ranging from 240 to 450°C, preferably from 270 to 430°C. It is preferable to operate with an LHSV ranging from 0.5 to 2 hours⁻¹, even more preferably from 0.5 to 1 hour⁻¹. The ratio H₂/mixture of a biological origin preferably ranges from 400 to 2,000 Nl/l.

Before the HDO step, the feedstock of a biological origin can be suitably treated in order to remove the content of alkaline metals (for example Na, K) and alkaline earth metals (for example Ca), possibly contained in the feedstock. This pre-treatment can be carried out by adsorption on a suitable material: for example, the known percolation techniques can be used on a column filled with acid earth or clays such as for example montmorillonites, bentonites, smectites, acid sepiolites. For this purpose, the products available on the market such as Filtrol, Tonsil, Bentolites H and L, SAT-1, can be used.

Alternatively, ion exchange resins can be used, or slightly acid washings, effected for example by contact with sulfuric acid, nitric acid or hydrochloric acid, preferably at room temperature and atmospheric pressure.

The effluents of the hydrodeoxygenation HDO step (1) are preferably subjected to a purification treatment and used for preparing the hydrocarbon composition, or they are sent, preferably after purification, to the subsequent hydroisomerization step.

The purification treatment can comprise a separation step and a washing step. According to this preferred aspect, it operates by sending the effluents of step (1) to a high-pressure gas-liquid separator. A gaseous phase, essentially consisting of hydrogen, water, CO and CO₂ and light paraffins (C₄⁻), is recovered. NH₃, PH₃ and H₂S can also be present in small quantities. After separation, the gaseous phase is cooled and the water (possibly containing traces of alcohols and carboxylic acids) and condensable hydrocarbons are separated by condensation. The remaining gaseous phase is purified to allow the recycling of hydrogen to the reaction step (1). Methods of the known art are adopted for the purification, by means of caustic washings, for example with aqueous solutions of NaOH or Ca(OH)₂, or by means of the well-known purification technique with amines (for example MEA, mono-ethanolamine, or DEA, diethanolamine). At the end of the purification the CO₂, H₂S, PH₃ and NH₃ are removed and the gaseous fraction thus obtained essentially consists of H₂ with possible traces of CO. In order to limit the accumulation of CO in the recycled gases, it can be removed by cuproammonial washing or by methanation, according to technologies known to experts in the field.

The liquid phase separated in the high-pressure separator consists of a hydrocarbon fraction, essentially composed of linear paraffins with a number of carbon atoms varying from 14 to 21, prevalently from 15 to 19. Depending on the operative conditions of the separator, the liquid fraction can contain small quantities of H₂O and oxygenated compounds, such as for example alcohols and carbonyl compounds. The residual S can be lower than 10 ppm. The liquid fraction can then be washed with a gaseous hydrocarbon, for example, CH₄, or nitrogen or hydrogen, in a stripper, in order to further reduce its water content.

As mentioned above, the hydrocarbon mixture thus obtained can be used as such in the process of the present invention or, alternatively, it is fed to the subsequent hydroisomerization step (2). The hydroisomerization step can be carried out in the presence of hydrogen according to any of the techniques well-known to experts in the field. All the known hydroisomerization catalysts can be used: catalysts can be used, for example, containing zeolites and/or metals of group VIII, and a carrier selected, for example, from alumina or silica. The zeolite can be selected from SAPO-11, SAPO-41, ZSM-22, ZSM-23 or ferrierite, the metal of group VIII is preferably Pt, Pd or Ni. Catalysts which can be used are, for example, Pt/ZSM-22/Al₂O₃ and Pt/ZSM-23/Al₂O₃. According to a particularly preferred aspect, in accordance with what is described in WO 2008/058664 and in WO2008/113492 a catalytic composition is used, comprising:
a) a carrier of an acid nature comprising a completely amorphous micro-mesoporous silico-alumina having a SiO₂/Al₂O₃ molar ratio ranging from 30 to 500, a surface area greater than 500 m²/g, a pore volume ranging from 0.3 to 1.3 ml/g, an average pore diameter less than 40 Å,
b) a metallic component comprising one or more metals of group VIII, possibly mixed with one or more metals of group VIB.

The carrier of an acid nature (a) of the catalytic composition used in the present invention comprises a silico-alumina preferably having a SiO₂/Al₂O₃ molar ratio ranging from 50 to 300.

According to a preferred aspect, the carrier of an acid nature (a) comprises a silico-alumina with a porosity ranging from 0.3 to 0.6 ml/g.

Completely amorphous micro-mesoporous silico-aluminas which can be used as carrier (a) of the catalytic compositions of the hydroisomerization step of the present invention are described in US 5049536, EP 659478, EP 812804, and called MSA. Their XRD powder spectrum does not have a crystalline structure and does not show any peak. Various preparation methods of silico-aluminas suitable as carrier (a), are also described in US 5,049,536, EP 659478, EP 812804. Silico-aluminas useful for the process of the present invention can be prepared, for example, in accordance with EP 659478, starting from tetra-alkylammonium hydroxide, an aluminum compound which can be hydrolyzed to Al₂O₃, and a silicon compound which can be hydrolyzed to SiO₂, wherein said tetra-alkylammonium hydroxide is a tetra(C₂-C₅)alkylammonium hydroxide, said hydrolyzable aluminum compound is an aluminum tri(C₂-C₄)alkoxide and said hydrolyzable silicon compound is a tetra(C₁-C₅)alkylorthosilicate: these reagents are subjected to hydrolysis and gelification operating at a temperature equal to or higher than the boiling point, at atmospheric pressure, of any alcohol which is developed as by-product of said hydrolysis reaction, without the elimination or substantial elimination of said alcohols from the reaction environment. The gel thus produced is dried and calcined, preferably in an oxidizing atmosphere at a temperature ranging from 500 to 700°C, for a period of 6-10 hours. It is preferable to operate by preparing an aqueous solution of the tetra-alkylammonium hydroxide and aluminum trialkoxide and the tetra-alkylorthosilicate is added to said aqueous solution, operating at a temperature lower than the hydrolysis temperature, with a quantity of the reagents which is such as to respect the SiO₂/Al₂O₃ molar ratios of 30/1 to 500/1, the tetra-alkylammonium hydroxide/SiO₂ molar ratio of 0.05/1 to 0.2/1 and H₂O/SiO₂ molar ratio of 5/1 to 40/1, the hydrolysis and gelification is caused by heating to a temperature higher than approximately 65°C up to about 110°C, operating in an autoclave at the autogenous pressure of the system, or at atmospheric pressure in a reactor equipped with a condenser.

According to EP 812804, silico-aluminas which can be used as component (a) of the catalytic composition for the hydroisomerization step can be prepared by means of a process which comprises:
- preparing a mixture starting from a tetra-alkylorthosilicate, a C₃-C₆ alkyl alcohol or dialcohol, a tetra-alkylammonium hydroxide having the formula R₁(R₂)₃NOH wherein R₁ is a C₃-C₇ alkyl and R₂ is a C₁ or C₃-C₇ alkyl, in the presence of a hydrolyzable aluminum compound, wherein the molar ratios fall within the following ranges:
   alcohol/SiO₂ ≤20
   R₁(R₂)₃NOH/ SiO₂ = 0.05-0.4
   H₂O/SiO₂ = 1-40
   Al₂O₃/SiO₂ greater than 0 and less than 0.02
- subjecting said mixture to hydrolysis and subsequent gelification at a temperature close to the boiling point of the alcohol or mixture of alcohols present;
- subjecting the gel obtained to drying and calcination.

The carrier of acidic nature of the catalyst (a) which is used in the process of the present invention can be in the form of an extruded product containing traditional binders, such as for example aluminum oxide, bohemite or pseudobohemite. The extruded product can be prepared according to techniques well-known to experts in the field. The silico-alumina and the binder can be premixed in weight ratios ranging from 30:70 to 90:10, preferably from 50:50 to 70:30. At the end of the mixing, the product obtained is consolidated into the desired end-form, for example extruded pellets or tablets. According to a preferred embodiment the methods and binders described in EP 550922 and EP 665055 can be used, the latter being preferred, whose contents are incorporated herein as reference.

A typical method for preparing the component of an acid nature (a) in extruded form (EP 665055) comprises the following steps:
(A) preparing an aqueous solution of a tetra-alkylammonium hydroxide (TAA-OH), a soluble aluminum compound capable of hydrolyzing to Al₂O₃ and a silicon compound capable of hydrolyzing to SiO₂, in the following molar ratios:
   SiO₂/Al₂O₃ from 30/1 to 500/1
   TAA-OH/SiO₂ from 0.05/1 to 0.2/1
   H₂O/SiO₂ from 5/1 to 40/1
(B) heating the solution thus obtained to cause its hydrolysis and gelification and obtain a mixture A with a viscosity ranging from 0.01 to 100 Pa sec;
(C) adding first a binder to the mixture (A), belonging to the group of bohemites or pseudobohemites, in a weight ratio with the mixture A ranging from 0.05 to 0.5, and subsequently a mineral or organic acid in a quantity ranging from 0.5 to 8.0 g per 100 g of binder;
(D) heating the mixture obtained under point (C), under stirring, to a temperature ranging from 40 to 90°C, until a homogeneous paste is obtained, which is subjected to extrusion and granulation;
(E) drying the extruded product and calcining it in an oxidizing atmosphere.

In step (C), plasticizing agents such as methylcellulose, are also preferably added, to favour the formation of a homogeneous and easily processable paste.

In this way a granular acid carrier is obtained, preferably containing a quantity ranging from 30 to 70% by weight of inert inorganic binder, the remaining quantity consisting of amorphous silico-alumina essentially having the same characteristics with respect to porosity, surface extension and structure described above for the same silico-alumina without a binder.

With respect to the metals contained in the metallic component (b) of the catalytic compositions used in the hydroisomerization step of the process of the present invention, these are selected from metals of group VIII, possibly mixed with one or more metals of group VIB.

Compositions containing metals of group VIII only are preferred. The metal or metals of group VIII are preferably selected from Pt, Pd, Ni and Co. In particular, when the metallic component contains only metals of group VIII, the metal or metals are preferably selected from Pt, Pd and Ni. When the metallic component contains both one or more metals of group VIII and one or more metals of group VIB, the metal of group VIII is preferably selected from Ni and Co. The metal of group VIB is preferably selected from Mo and W.

The metal of group VIII is preferably in a quantity ranging from 0.1 to 5% by weight with respect to the total weight of the catalytic composition. The metal of group VIB, when present, is in a quantity ranging from 1 to 50, even more preferably in a quantity ranging from 5 to 35% by weight with respect to the total weight of the catalytic composition. The weight percentage of the metal, or metals, refers to the metal content expressed as a metallic element; in the final catalyst, after calcination, said metal is in the form of an oxide.

The metals of group VIII, and optionally group VI, contained in the catalytic composition used in the hydroisomerization step (2) can be deposited onto the carrier (a) with all the techniques known to experts in the field. Catalytic compositions which can be conveniently used in the hydroisomerization step of the present invention containing one or more metals of group VIII, and their preparations, are described in EP 582347, EP 1101813 and WO 2005/103207.

In particular, EP 582347 describes catalytic compositions, useful in the hydroisomerization of n-paraffins, containing one or more metals of group VIII and a carrier of silica gel and alumina amorphous to X-rays, with a SiO₂/Al₂O₃ molar ratio ranging from 30 to 500, a surface area within the range of 500 to 1,000 m²/g, a pore volume ranging from 0.3 to 0.6 ml/g and a pore diameter prevalently within the range of 10 to 30 Å. EP 1101813 describes catalytic compositions, which can be used for the preparation of medium distillates, containing one or more metals of group VIII and a carrier of silica gel and calcined alumina, amorphous to X-rays, with a SiO₂/Al₂O₃ molar ratio ranging from 30 to 500, a surface area within the range of 500 to 1,000 m²/g, a pore volume ranging from 0.2 to 0.8 ml/g and an average pore diameter within the range of 10 to 40 Å.

WO 2005/103207 describes catalytic compositions which can be used for the upgrading of distillates, containing one or more metals selected from Pt, Pd, Ir, Ru, Rh and Re and a silico-alumina carrier, amorphous to X-rays, with a SiO₂/Al₂O₃ molar ratio ranging from 30 to 500, a surface area greater than 500 m²/g, a pore volume ranging from 0.3 to 1.3 ml/g and an average pore diameter less than 40 Å.

In general, in the compositions used in the hydroisomerization step (2), containing only the metal of group VIII, the metal according to the preparations described in the patents indicated above, can be introduced by means of impregnation or ion exchange. According to the first technique, the component of an acid nature (a), also in extruded form, and preferably in the extruded form prepared according to the process described in EP 665055, is wet with an aqueous solution of a compound of the metal of group VIII, operating for example at room temperature, and at a pH ranging from 1 to 4. The aqueous solution preferably has a concentration of metal expressed as g/l ranging from 0.2 to 2.0. The resulting product is dried, preferably in air, at room temperature, and is calcined in an oxidizing atmosphere at a temperature ranging from 200 to 600°C.

In the case of alcohol impregnation, the acid component (a), also in extruded form, and preferably in the extruded form prepared according to the process described in EP 665055, is suspended in an alcohol solution containing the metal. After impregnation, the solid is dried and calcined.

According to the ion exchange technique, the acid component (a), also in extruded form, and preferably in the extruded form prepared according to the process described in EP 665055, is suspended in an aqueous solution of a complex or salt of the metal, operating at room temperature and at a pH ranging from 6 to 10. After the ion exchange, the solid is separated, washed with water, dried and finally thermally treated in an inert and oxidizing atmosphere. Temperatures which can be used for the purpose are those ranging from 200 to 600°C.

Compounds of metals which can be conveniently used in the preparations described above are: H₂PtCl₆, Pt(NH₃)₄(OH)₂, Pt(NH₃)₄Cl₂, Pd(NH₃)₄(OH)₂, PdCl₂, (CH₃COO)₂Ni, (CH₃COO)₂Co. When the catalytic composition comprises more than one metal of group VIII, the impregnation is carried out as follows: the acid component (a), also in extruded form, and preferably in the extruded form prepared according to the process described in EP 665055, is wet with a solution of a compound of a first metal, the resulting product is dried, it is optionally calcined, and is impregnated with a solution of a compound of a second metal. The product is dried and is then calcined in an oxidizing atmosphere at a temperature ranging from 200 to 600°C. Alternatively a single aqueous solution containing two or more compounds of different metals can be used for contemporaneously introducing said metals.

Before being used, the catalyst is activated by the known techniques, for example by means of a reduction treatment, and preferably by means of drying and subsequent reduction. The drying is effected in an inert atmosphere at temperatures ranging from 25 to 100°C, whereas the reduction is obtained by thermal treatment of the catalyst in a reducing atmosphere (H₂) at a temperature ranging from 300 to 450°C, and a pressure preferably ranging from 1 to 50 bar.

Catalytic compositions which can be conveniently used in the hydroisomerization step containing one or more metals of group VIII and additionally one or more metals of group VIB, and their preparations, are described in EP 908231 and EP 1050571. In particular, EP 908231 describes catalytic compositions containing a mixture of metals belonging to groups VIB and VIII and a carrier of silica gel and alumina amorphous to X-rays, with a SiO₂/Al₂O₃ molar ratio ranging from 30 to 500, a surface area within the range of 500 to 1,000 m²/g, a pore volume ranging from 0.3 to 0.6 ml/g and an average pore diameter within the range of 10 to 40 Å. When the hydroisomerization catalyst also contains a metal of group VIB in the metallic phase (b), the catalyst can be prepared by means of aqueous or alcohol impregnation. More specifically, according to the first technique, the silico-alumina, also in extruded form, and preferably in the extruded form prepared according to the process described in EP 665055, is wet with an aqueous solution of a compound of the desired metal of group VIB, operating at room temperature or at a temperature close to room temperature. After aqueous impregnation, the solid is dried and then a new impregnation is effected with an aqueous solution of a compound of the desired metal of group VIII. After aqueous impregnation, the solid is dried again and thermally treated in an oxidizing atmosphere. Suitable temperatures for this thermal treatment range from 200 to 600°C. The aqueous impregnation of the metallic phase can also be effected in a single step, wherein the silico-alumina based acid carrier is wet with a single aqueous solution containing both of the metal compounds of groups VIB and VIII, subsequently proceeding with the same operating procedures described above. In the alcohol impregnation technique, the silico-alumina, also in extruded form, and preferably in the extruded form prepared according to the process described in EP 665055, is suspended in an alcohol solution of a compound of a metal of group VIB and a compound of a metal of group VIII, operating at room temperature or a value close to room temperature. After impregnation the solid is dried, preferably in air, at a temperature of about 100°C and thermally treated in an oxidizing atmosphere, preferably in air.

The final hydroisomerization catalyst can be formulated and formed into extruded products having different forms (for example cylindrical, trilobated, etc.) as described for example in EP 1101813.

The type of reactor for the hydroisomerization step is a fixed bed reactor. The heat control in this case is not critical as the reaction is slightly exothermic. For this reason, a reactor with adiabatic layers is suitable. A tube bundle reactor can in any case also be used.

The liquid feedstock deriving from the hydrodeoxygenation step can be sent to the reactor in equicurrent or in countercurrent with respect to the hydrogen. The countercurrent arrangement is preferred when the liquid feedstock contains a significant level of water and/or non-converted oxygenated compounds in the first step of the process (>300 ppm of oxygen).

The water present, or formed by the oxygenated compounds during the hydroisomerization is therefore removed in gaseous phase in the first part of the catalytic bed, thus reducing the contact time with the rest of the catalyst. A particularly preferred arrangement for this catalytic step is a reactor with a number of layers greater than or equal to 2, wherein the first layer immersed by the hydrocarbon liquid stream deriving from the hydrodeoxygenation step, therefore corresponding to the last layer immersed by the gaseous hydrogen stream, consists, instead of the catalyst, of a filling of structures of inert material, for example ceramics or stainless steel, or pellets or spherules of inert material, such as for example, pumice, alpha-alumina, glass. The role of the filling is to favour the gas-liquid contact, as the hydrocarbon feedstock to be isomerized will encounter the gaseous hydrogen stream before flowing onto the catalytic bed, thus being further anhydrified.

The hydroisomerization can be conveniently effected at a temperature ranging from 250 to 450°C, preferably from 280 to 380°C, and at a pressure ranging from 25 to 70 bar, preferably from 30 to 50 bar. It is preferable to operate at a LHSV ranging from 0.5 to 2 hours⁻¹. The H₂/HC ratio preferably ranges from 200 to 1,000 Nl/l.

The reaction conditions can be suitably selected to obtain a product whose characteristics are balanced in relation to the cold properties of the diesel cut and gasoline cut with which the hydroisomerization product is subsequently mixed for preparing the hydrocarbon compositions in the process of the present invention. The mixture resulting from the hydroisomerization step is subjected to distillation to obtain a purified hydrocarbon mixture which is used as component of a biological origin in the new hydrocarbon compositionsobtained by the process of the present invention, having improved cold properties, a high cetane number, a high oxidative stability, a high content of biological component.

The hydrocarbon compositions obtained by the process of the present invention are particularly useful as both diesel fuels for engines and as combustibles for heating.

To provide a more detailed description of the present invention, some examples of the preparation and use of the compositions obtained by the process object of the present invention, are provided hereunder, which however are of a purely illustrative nature of particular aspects of the invention and can in no way be considered as limiting the overall scope of the same.

### EXAMPLE 1 - Preparation of the catalyst Pt/MSA Reagents and materials

The following commercial reagents were used in the preparation described hereunder:

| | |
|---|---|
| tetrapropylammonium hydroxide (TPA-OH) | SACHEM |
| aluminum tri-isopropoxide | FLUKA |
| tetra-ethylsilicate | DYNAMIT NOBEL |
| alumina (VERSAL 250, Pseudo-Boehmite) | LAROCHE |
| methylcellulose (METHOCEL) | FLUKA |

The reagents and/or solvents used and not indicated above are those most widely used and can be easily found at normal commercial operators specialized in the field.

### PREPARATIVE EXAMPLE

### (i) Preparation of the silico-alumina gel

A 100 litre reactor was preliminarily washed with 75 litres of a solution at 1% by weight of tetrapropylammonium hydroxide (TPA-OH) in demineralized water, maintaining the liquid under stirring for 6 hours at 120°C. The washing solution is discharged and 23.5 litres of demineralized water, 19.6 kg of an aqueous solution at 14.4% by weight of TPA-OH (13.8 moles) and 600 g of aluminum tri-isopropoxide (2.94 moles) are introduced. The mixture is heated to 60°C and kept under stirring at this temperature for 1 hour, so as to obtain a limpid solution. The temperature of the solution is then brought to 90°C and 31.1 kg of tetra-ethylsilicate (149 moles) are rapidly added. The reactor is closed and the stirring rate is regulated to about 1.2 m/s, maintaining the mixture under stirring for three hours at a temperature ranging from 80 to 90°C, with thermostat-regulated control to remove the heat produced by the hydrolysis reaction. The pressure in the reactor rises to about 0.2 MPag. At the end, the reaction mixture is discharged and cooled to room temperature, obtaining a homogeneous and relatively fluid gel (viscosity 0.011 Pa•s) having the following composition molar ratios:
SiO₂/Al₂O₃ = 101
TPA-OH/SiO₂ = 0.093
H₂O/SiO₂ = 21

### (ii) Preparation of the extruded product

1,150 g of alumina (VERSAL 150), previously dried for 3 hours in air at 150°C, and 190 g of methylcellulose, are charged into a 10 litre plough mixer, maintained at a stirring rate of 70-80 revs per minute. 5 kg of the silico-alumina gel prepared as described above are then added over a period of time of about 15 minutes, and left to rest for about 20 hours, and the mixture is left under stirring for about 1 hour. 6 g of glacial acetic acid are added and the temperature of the mixer is brought to about 60°C, subsequently continuing the stirring until a homogeneous paste is obtained, having the desired consistency for the subsequent extrusion.

The homogenous paste obtained as described above is charged into a HUTT type extruder, extruded and cut into cylindrical pellets having the desired size (about 2 x 4 mm) . The product is left to rest for about 6-8 hours and then dried maintaining it in a stream of air at 100°C for 5 hours. It is finally calcined in a muffle at 550°C for 3 hours in a flow of nitrogen and for a further 8 hours in air.

A porous solid with acid characteristics is thus obtained, essentially consisting of silica/alumina (yield 95% with respect to the respective initial reagents), having a BET of 608 m²/g.

### (iii) Impregnation of the carrier with platinum

12.1 ml of an aqueous solution of hydrochloric acid 0.6 M containing 4.5 g/l of hexachloroplatinic acid (H₂PtCl₆, 0.133 mmoles) are dripped under slow stirring into a glass recipient containing 10 g of the porous solid prepared as described above. The mixture thus obtained is left under stirring for 16 hours at room temperature. The water is then evaporated at 60°C in a stream of air, over a period of about 1 hour. The solid obtained is then dried maintaining it at 150°C for two hours, and calcined by heating in a muffle, in a stream of air, from room temperature to 500°C over a period of three hours. At the end, a supported catalyst is obtained, which is used in the hydroisomerization step described in the subsequent example 3, having the following characteristics:
59.8% by weight of amorphous silico-alumina (SiO₂/Al₂O₃ molar ratio = 102)
39.9% by weight of alumina (pseudo-bohemite)
0.3% by weight of platinum
Pore volume: 0.6 ml/g
BET: 600 m²/g
Crushing strength: 10 kg/cm (radial);
90 kg/cm² (axial)

### EXAMPLE 2 - Hydrodeoxygenation step (HDO)

The experimentation is carried out in a continuous reactor fed with soya oil having the characteristics indicated in Table 1 (refined soya oil Sipral, coming from GIOMA VARO)

The vegetable oil is fed to the first step with hydrogen in equicurrent in the presence of the commercial hydrogenation catalyst UOP UF 210 based on NiMo/Al₂O₃ in sulfided form. The sulfidation of the catalyst is effected in situ using gas oil containing dimethyldisulfide (DMDS) in a concentration progressively ranging from 3 to 9% by weight, at a temperature progressively within the range of 230 to 370°C and at a pressure of 70 bar, with a H₂/gas oil ratio of 1,300 Nl/l and LHSV of 0.8 hours⁻¹. The vegetable oil is fed to the reactor in the presence of a small quantity of DMDS (0.025%) to maintain the catalyst in sulfided form.

The feedstock and hydrogen flow into the reactor in descending mode.

The operating conditions used are the following:
• Temperature : 320-350°C
• LHSV: 1 hour⁻¹
• Pressure: 35 bar
• H₂/oil: 1,500 Nl/l

**Table 1**

| | **Refined Soya Oil** |
|---|---|
| Palmitic acid % *(C16-0) | 13.06 |
| Stearic acid % *(C18-0) | 0.84 |
| Oleic acid % *(C18-1) | 27.09 |
| Linoleic acid % *(C18-2) | 53.63 |
| Linolenic acid % *(C18-3) | 5.11 |
| Arachidic acid % (C20-0) | 0.07 |
| Acidity (mgKOH/g) | 0.11 |
| H₂O (ppm) | 2200 |
| Na (ppm) | 0.3 |
| K (ppm) | 0.7 |
| Ca (ppm) | 0.3 |
| Mg (ppm) | 0.1 |
| Al (ppm) | 0.01 |
| P (ppm) | 0.65 |
| Fe (ppm) | <0.05 |
| Cu (ppm) | 0.02 |

* The first number in brackets indicates the carbon atoms, the second, the unsaturations.

The effluent product is separated, in a gas/liquid separator from the gaseous fraction consisting of H₂, CO/CO₂ and light hydrocarbons almost totally consisting of C₃H₈.

After separation of the water, the liquid product proves to consist of n-paraffins, whose characteristics and distribution are indicated in Table 2 below:

**Table 2.**

| | |
|---|---|
| Density (g/ml) | 0.7861 |
| Carbon (%w/w) | 84.8 |
| Hydrogen (% w/w) | 14.9 |
| Nitrogen (ppm) | <1 |
| Sulfur (ppm) | <3 |
| Oxygen (calculated by difference, %) | 0.3 |
| H₂O (after anhydrification, ppm) | 20 |
| Total aromatics (%) | <1 |
| Cloud Point | 23.3 |

| **Simulated Distillation (ASTM D2887)** | |
|---|---|
| Initial Point, °C | 265 |
| 2% | 273 |
| 5% | 275 |
| 10% | 291 |
| 50% | 314 |
| 90% | 331 |
| 95% | 332 |
| 98% | 391 |
| Final Point, °C | 465 |

| **Distribution of the paraffins (%)** | |
|---|---|
| Total n-Paraffins | 95.6 |
| Total iso-Paraffins | 4.4 |

Part of the product thus obtained is used as component (B) in Example 4 for the preparation of hydrocarbon compositions according to the process of the present invention, whereas the remaining part is used in the following hydroisomerization step.

### EXAMPLE 3 - Hydroisomerization step

Part of the product obtained in the deoxygenation step described in Example 2, containing 100 ppm of residual H₂O, is treated in equicurrent with hydrogen in the presence of the catalyst Pt/MSA prepared in the previous Example 1.

The operative conditions used are indicated in Table 3

**Table 3**

| | |
|---|---|
| Temperature | 320-360°C |
| LHSV | 2 hours⁻¹ |
| Pressure | 35 bar |
| H2/HC | 1000 Nl/l |

The effluent product from the hydroisomerization reactor consists of a gaseous phase and a liquid phase, the two phases are separated in a gas-liquid separator, the gaseous phase analyzed via GC, consists light C3/C4 of paraffins (LPG), whereas the liquid phase separated, containing paraffins with a number of carbon atoms ranging from 5 to 22, is analyzed by means of GC to evaluate the isomerization degree, which, under these operating conditions, is 79%, and used for estimating the distillation curve.

The hydrocarbon product is then sent to a distillation column in order to separate the gasoline fraction (12.7%) from the diesel fraction (87.3%). The latter fraction containing paraffins with a number of carbon atoms ranging from 12 to 22, was characterized and the main properties indicated in Table 4 below:

**Table 4**

| | | |
|---|---|---|
| Density, g/cm3 | ASTM D 4052-96 | 0.7795 |
| Sulfur, ppm | ISO 20846 | <3 |
| Cloud Point, °C | ASTM D2500-05 | -7.8 |
| Cetane number | ENI ISO 5165 | >76 |
| Total Aromatics, % | | < 1 |
| Iso Paraffins, % | | 81.1 |
| n-Paraffins, % | | 18.9 |

| **Distillation (ASTM D86)** | | |
|---|---|---|
| 5%, °C | | 219 |
| 10%, °C | | 240 |
| 50%, °C | | 284 |
| 90%,°C | | 293 |
| 95%, °C | | 295 |

The fraction thus obtained is used, as component (B), in the following Example 5 for the preparation of hydrocarbon compositions according to the process of the present invention.

### EXAMPLE 4

Table 5 indicates the characteristics of the components used for preparing hydrocarbon compositions according to the process of the present invention.

In particular, the term desulfurated (A) refers to a gas oil of a desulfurated mineral origin (S<10ppm).

As far as the components of the type A1 are concerned, the term HCN des refers to FCC heavy gasoline subjected to desulfuration treatment whereas the term heavy reformate refers to the 160°C+ cut of a catalytic reforming gasoline.

For component B, the product obtained from Example 2 (deoxygenated) and the product obtained from Example 3 (deoxygenated and isomerized) are used.

**Table 5**

| | | A | A1 | A1 | B | B |
|---|---|---|---|---|---|---|
| | | Desulfur. | HCN des | Heavy reformate | Deoxyg. | Deoxyg. and isomer. |
| Dens | Kg/m3 | 833.8 | 869,8 | 890.6 | 786.1 | 779.5 |
| V40 | cSt | 2.6 | *1.1* | *1.1* | *3.75* | 2.79 |
| Cp | °C | -5.1 | <-32 | <-32 | 23.3 | -7.8 |
| Cfpp | °C | -11.0 | <-32 | <-32 | | -10 |
| FP | °C | 66.0 | *49* | *48* | *160* | 74 |
| IQT | | 49.2 | | | | |
| Cl4 | | 51.5 | 20.1 | 9.4 | | 92.6 |
| Poly A | %wt | 3.4 | 10.6 | 7.8 | <0.1 | <0.1 |

Table 6 indicates the characteristics of a comparative mixture (first column) consisting of a component containing the gas oil component and the biological component deriving from the deoxygenation of Example 2 in a volume ratio of 1:1, and the characteristics of two mixtures according to the invention in which the volume ratio between gas oil component and biological component of 1:1 is maintained and an aliquot, equal to 20% by volume, of a gasoline component (second column: gasoline HCN des; third column: heavy reformate gasoline), is added. The presence of this aliquot of gasoline allows the European reference density specification (820 kg/m³ min) to be reached with an improvement in the cold properties and oxidation stability of the mixture as is evident from comparing the values of the parameters Cloud Point, CFPP and Rancimat.

**Table 6.**

| | %vol | | |
|---|---|---|---|
| Desulfurated | 50 | 40 | 40 |
| HCN des | | 20 | |
| Heavy reformate | | | 20 |
| Deoxygenated | 50 | 40 | 40 |
| Deox and isom | | | |

| | %weight | | |
|---|---|---|---|
| Desulfurated | 51.5 | 40,6 | 40.4 |
| HCN des | | 21.2 | |
| Heavy reformate | | | 21.6 |
| Deoxygenated | 48.5 | 38.3 | 38.1 |
| Deox and isom | | | |

| | Mix quality | | |
|---|---|---|---|
| Dens (Kg/m3) | 809.9 | 821.2 | 826.1 |
| V40 (cSt) | 3.08 | 2.41 | 2.37 |
| Cp(°C) | 9 | 3.9 | 3.5 |
| Cfpp (°C) | 6 | -1 | 1 |
| FP (°C) | 81 | 70 | 68 |
| IQT | 73 | 60 | |
| Cl4 | 73 | 60 | |
| Rancimat (hrs) | 73 | >125 | |
| Poly A (%wt) | 1.8 | 3.6 | 3.1 |

In the previous tables V40 is the viscosity determined at 40°C; FP is the Flash Point; IQT is the Ignition Quality Tester, CI4 is the cetane index with 4 variables,, Poly A are the polyaromatics.

### EXAMPLE 5

Table 7 indicates the characteristics of a comparative mixture (first column) composed of a component containing the gas oil component and biological component deriving from the deoxygenation and isomerization according to Example 3 in a volume ratio of 1:1, and the characteristics of two mixtures according to the invention in which the volume ratio of 1:1 is maintained between the gas oil component and biological component and an aliquot, equal to 20% by volume, of a gasoline component is added (second column: gasoline HCN des; third column: heavy reformate gasoline). The presence of this aliquot of gasoline allows the European reference density specification (820 kg/m³ min) to be reached, with an improvement in the cold properties and oxidation stability of the mixture, as is evident from a comparison of the Cloud Point, CFPP and Rancimat parameters.

**Table 7.**

| | %vol | | |
|---|---|---|---|
| Desulfurated | 50 | 40 | 40 |
| HCN des Bottom | | 20 | |
| Ref bottom | | | 20 |
| Deoxygenated | | | |
| Deox and isom | 50 | 40 | 40 |

| | %weight | | |
|---|---|---|---|
| Desulfurated | 51.7 | 40.7 | 40.5 |
| HCN des bottom | | 21.2 | |
| Reformate bottom | | | 21.6 |
| Deoxygenated | 48.3 | 38.1 | 37.9 |
| Deox and isom | | | |

| | | | |
|---|---|---|---|
| Dens (Kg/m3) | 806.8 | 819.3 | 823.0 |
| V40 (cSt) | 2.68 | 2.16 | 2.0 |
| Cp(°C) | -10.9 | -15 | -15.8 |
| Cfpp (°C) | -14 | -17 | -18.0 |
| FP (°C) | 69 | 64 | 62 |
| IQT | 64 | 54 | 52 |
| Cl4 | 69 | 57 | 55 |
| Poly A (%wt) | 1.8 | 3.6 | 3.1 |

In the previous table, V40 is the viscosity determined at 40°C; FP is the Flash Point; IQT is the Ignition Quality Tester, CI4 is the cetane index with 4 variables, Poly A are the polyaromatics.

## Claims

1. A process for preparing a hydrocarbon composition which comprises mixing:
- a gasoil component (A), in an amount from 20 to 95% by weight, deriving from the mixing of medium distillates having a boiling point ranging from 180 to 380 °C;
- a gasoline component (A1), in an amount from 1 to 40% by weight, **characterized by** a T95 (ASTM D86) lower than 250°C having a density ranging from 855 to 910 kg/m³;
- a hydrocarbon component of a biological origin (B), in an amount from 4 to 60% by weight,
wherein said hydrocarbon component of a biological origin (B) is obtained starting from a mixture of a biological origin (C) containing esters of fatty acids, possibly with quantities of free fatty acids, by means of a process which comprises:
1) hydrodeoxygenation step of the mixture of a biological origin, and
2) possibly a hydroisomerization step of the mixture resulting from step (1);
wherein said hydrocarbon composition is **characterized by** an improvement in the CFPP which varies from 0.2 to 5°C in relation to the concentration of said gasoline component (A1), and an improvement in the cloud point ranging from 0.2 to 5°C in relation to the concentration of said gasoline component (A1), with respect to the composition not containing said gasoline component (A1); and wherein said hydrocarbon component of a biological origin thus obtained has a density ranging from 750 to 800 kg/m³, a viscosity ranging from 2.00 to 4.00 cSt, a cloud point ranging from-20 to +5 °C, a sulfur content lower than 3 mg/kg, a nitrogen content lower than 3 mg/kg, an acidity lower than 0.1 mg KOH/g, a boiling range from 240 to 300 °C expressed as boiling point of 10% vol. and 90% vol. in ASTM D86, the CFPP of the component of a biological origin (B) preferably ranging from -25 to +5 °C.

2. The process according to claim 1, wherein the medium distillates are gasoils from primary distillation, gasoils from vacuum distillation, gasoils from thermal or catalytic cracking, fuels from a Fischer-Tropsch process or fuels of a synthetic origin.

3. The process according to claim 2, wherein the gasoil from catalytic cracking is a desulfurized gasoil cut coming from fluid bed catalytic cracking (light cycle oil (LCO)).

4. The process according to one or more of the previous claims, wherein the cuts used in the diesel component have undergone a hydrogenation treatment.

5. The process according to claim 1, wherein the gasoline is **characterized by** a T95 lowerthan 240°C.

6. The process according to claim 1 or 5, wherein the gasoline component has a cp (cloud point) lower than - 40°C.

7. The process according to claim 1, 5 or 6, wherein the gasoline component has a content of aromatic compounds higher than 50% by weight with respect to the total weight of the gasoline.

8. The process according to one or more of the previous claims, wherein the gasoline used is selected from gasolines deriving from catalytic processes, gasolines deriving from reforming processes, and mixtures thereof.

9. The process according to claim 8, wherein the gasoline derives from fluid bed catalytic cracking processes (FCC).

10. The process according to claim 8 or 9, wherein heavy gasolines from FCC are used as such or desulfurized, heavy gasolines from reforming, or mixtures thereof.

11. The process according to claim 1, wherein to said hydrocarbon composition cold flow additives, detergents, lubricity improving additives, anti-foam agents, cetane number improvers, antirust agents, antioxidants, anti-wear agents, conductivity improvers are added.

12. The process according to claim 1, wherein the mixtures of a biological origin (C) are mixtures of a vegetable or animal origin.

13. The process according to claim 1 or 12, wherein the esters of fatty acids contained in the mixtures (C) are triglycerides of fatty acids, wherein the hydrocarbon chain of the fatty acid contains from 12 to 24 carbon atoms and is mono- or poly-unsaturated.

14. The process according to claim 1, 12 or 13, wherein the mixture of a biological origin is selected from vegetable oils, vegetable fats, animal fats, fish oils or mixtures thereof.

15. The process according to one or more of the previous claims, wherein the mixture of a biological origin (C) is selected from sunflower oil, rape oil, canola oil, palm oil, soybean oil, hemp oil, olive oil, linseed oil, peanut oil, castor oil, mustard oil, coconut oil, Jatropha oil, Virola oil, fatty oils contained in the pulp of pine trees (tall oil), bacon, lard, tallow, milk fats, recycled oils or fats of the food industry, of both an animal and vegetable origin, vegetable oils or fats deriving from plants selected by genetic manipulation, or mixtures thereof.

16. The process according to one or more of the previous claims, wherein the component of a biological origin (B) is obtained by means of a process comprising a hydrodeoxygenation step, and optionally an isomerization step, wherein in the hydrodeoxygenation step the mixture of a biological origin (C) is hydrodeoxygenated with hydrogen in the presence of a hydrodeoxygenation catalyst.

17. The process according to claim 16, wherein the catalysts contain a carrier and one or more metals selected from metals of group VIII and metals of group VIB.

18. The process according to claim 17, wherein the metal or metals are selected from Pd, Pt, Ni or from the pairs of metals Ni-Mo, Ni-W, Co-Mo and Co-W.

19. The process according to claim 18, wherein the catalysts of the type Ni-Mo, Ni-W, Co-Mo and Co-W are previously sulfided.

20. The process according to claim 16, wherein the hydrodeoxygenation step is carried out at a pressure varying from 25 to 70 bar, and at a temperature ranging from 240 to 450°C.

21. The process according to claim 20, wherein the hydrodeoxygenation step is carried out at a pressure varying from 30 to 50 bar, and at a temperature ranging from 270 to 430°C.

22. The process according to claim 1, wherein before the hydrodeoxygenation step, the charge of a biological origin is treated in order to remove the content of alkaline and alkaline earth metals by means of adsorption or blandly acid washings.

23. The process according to one or more of the previous claims, wherein the component of a biological origin (B) is obtained by means of a process comprising a hydrodeoxygenation step, and an isomerization step, wherein the isomerization step is effected in the presence of hydrogen and a hydroisomerization catalyst.

24. The process according to claim 23, wherein the catalyst is selected from catalysts containing zeolites and/or metals of group VIII, and a carrier.

25. The process according to claim 1 or 24, wherein in the hydroisomerization step a catalytic composition is used, comprising:
a) a carrier of an acid nature comprising a completely amorphous micro-mesoporous silico-alumina having a SiO₂/Al₂O₃ molar ratio ranging from 30 to 500, a surface area greater than 500 m²/g, a pore volume ranging from 0.3 to 1.3 ml/g, an average pore diameter less than 40 Å,
b) a metallic component comprising one or more metals of group VIII, possibly mixed with one or more metals of group VIB.

26. The process according to claim 25, wherein the carrier of an acid nature (a) of the catalytic composition used in the hydroisomerization step comprises a silico-alumina having a SiO₂/Al₂O₃ molar ratio ranging from 50 to 300.

27. The process according to claim 25, wherein the carrier of an acid nature (a) of the catalytic composition used in the hydroisomerization step comprises a silico-alumina having a porosity ranging from 0.3 to 0.6 ml/g.

28. The process according to claim 25, wherein the metal or metals of group VIII are selected from Pt, Pd, Ni and Co.

29. The process according to claim 1, 23 or 25, wherein the hydroisomerization step is carried out at a temperature ranging from 250 to 450°C, and at a pressure ranging from 25 to 70 bar.

30. The process according to claim 29, wherein the hydroisomerization step is carried out at a temperature ranging from 280 to 380°C, and at a pressure ranging from 30 to 50 bar.

31. The process according to claim 1, 23, 25 or 29, wherein the hydroisomerization step is carried out at a LHSV ranging from 0.5 to 2 hours⁻¹ and with a H₂/HC ratio ranging from 200 to 1000 Nl/l.

32. Use of the composition obtained from the process according to one or more of the previous claims as diesel fuel for engines or as fuel for heating.

## Patentansprüche

1. Verfahren zur Herstellung einer Kohlenwasserstoffzusammensetzung, welches umfasst das Vermischen:
- einer Gasölkomponente (A) in einer Menge von 20 bis 95 Gew.-%, abgeleitet vom Mischen eines Mitteldestillats mit einem Siedepunkt in einem Bereich von 180 bis 380 °C;
- einer Benzinkomponente (A1) in einer Menge von 1 bis 40 Gew.-%, **gekennzeichnet durch** einen T95 (ASTM D 86) von niedriger als 250 °C mit einer Dichte in einem Bereich von 855 bis 910 kg/m³;
- einer Kohlenwasserstoffkomponente von biologischer Herkunft (B) in einer Menge von 4 bis 60 Gew.-%,
wobei die Kohlenwasserstoffkomponente von biologischer Herkunft (B) erhalten wird ausgehend von einer Mischung von biologischer Herkunft (C), enthaltend Ester von Fettsäuren, gegebenenfalls mit Mengenanteilen freier Fettsäuren, mittels eines Verfahrens, welches umfasst:
1) einen Hydrodeoxygenierungsschritt der Mischung von biologischer Herkunft, und
2) gegebenenfalls einen Hydroisomerisierungsschritt der Mischung erhalten aus Schritt (1);
wobei die Kohlenwasserstoffzusammensetzung **gekennzeichnet ist durch** eine Verbesserung in CFPP, der von 0,2 bis 5 °C variiert in Beziehung zur Konzentration der Benzinkomponente (A1), und eine Verbesserung im Trübungspunkt in einem Bereich von 0,2 bis 5 °C in Beziehung zur Konzentration der Benzinkomponente (A1), hinsichtlich der Zusammensetzung, die nicht die Benzinkomponente (A1) enthält;
und wobei die so erhaltene Kohlenwasserstoffkomponente von biologischer Herkunft eine Dichte in einem Bereich von 750 bis 800 kg/m³ hat, eine Viskosität in einem Bereich von 2,00 bis 4,00 cSt, einen Trübungspunkt in einem Bereich von -20 bis +5 °C, einen Schwefelgehalt geringer als 3 mg/kg, einen Stickstoffgehalt geringer als 3 mg/kg, eine Acidität geringer als 0,1 mg KOH/g, einen Siedebereich von 240 bis 300 °C, ausgedrückt als Siedepunkt von 10 Vol.-% und 90 Vol.-% in ASTM D86, der CFPP der Komponente von biologischer Herkunft (B), vorzugsweise in einem Bereich von -25 bis +5 °C.

2. Verfahren gemäß Anspruch 1, worin die Mitteldestillate Gasöle aus der primären Destillation, Gasöle aus der Vakuumdestillation, Gasöle aus dem thermischen oder katalytischen Cracken, Brennstoffe aus einem Fischer-Tropsch-Verfahren oder Brennstoffe von synthetischer Herkunft sind.

3. Verfahren gemäß Anspruch 2, worin das Gasöl aus dem katalytischen Cracken ein entschwefelter Gasöl-Cut ist, der von dem Flüssigbett-katalytischen Cracken herstammt (leichtes Zyklusöl (LCO)).

4. Verfahren gemäß einem oder mehreren der vorhergehenden Ansprüche, worin die in der Dieselkomponente verwendeten Schnitte einer Hydrogenierungsbehandlung unterworfen wurden.

5. Verfahren gemäß Anspruch 1, worin das Benzin durch einen T95 geringer als 240 °C gekennzeichnet ist.

6. Verfahren gemäß Anspruch 1 oder 5, worin die Benzinkomponente einen cp (Trübungspunkt) geringer als -40 °C hat.

7. Verfahren gemäß Anspruch 1, 5 oder 6, worin die Benzinkomponente einen Gehalt an aromatischen Verbindungen größer als 50 Gew.-%, bezogen auf das Gesamtgewicht des Benzins, hat.

8. Verfahren nach einem oder mehreren der vorhergehenden Ansprüche, worin das verwendete Benzin ausgewählt ist aus Benzinen abgeleitet aus katalytischen Verfahren, Benzinen abgeleitet aus Reformierungsverfahren und Mischungen davon.

9. Verfahren gemäß Anspruch 8, worin das Benzin von einem Flüssigbett-katalytischen Crack-Verfahren (FCC) abgeleitet ist.

10. Verfahren gemäß Anspruch 8 oder 9, worin die schweren Benzine aus dem FCC als solche verwendet werden oder entschwefelt, schwere Benzine aus der Reformierung oder Mischungen davon.

11. Verfahren gemäß Anspruch 1, worin der Kohlenwasserstoffzusammensetzung Kaltfließadditive, Detergenzien, Schmiereigenschafts-verbessernde Additive, Anti-Schaummittel, Ketan-Zahl-Verbesserer, Anti-Rostmittel, Antioxidantien, Anti-Abriebmittel, Leitfähigkeits-Verbesserer zugegeben werden.

12. Verfahren gemäß Anspruch 1, worin die Mischungen von biologischer Herkunft (C) Mischungen aus pflanzlicher oder tierischer Herkunft sind.

13. Verfahren gemäß Anspruch 1 oder 12, worin die in den Mischungen (C) enthaltenen Ester von Fettsäuren Triglyceride von Fettsäuren sind, wobei die Kohlenwasserstoffkette der Fettsäure von 12 bis 24 Kohlenstoffatomen enthält und mono- oder poly-ungesättigt ist.

14. Verfahren gemäß Anspruch 1, 12 oder 13, worin die Mischung von biologischer Herkunft ausgewählt ist aus Pflanzenölen, Pflanzenfetten, Tierfetten, Fischölen oder Mischungen davon.

15. Verfahren gemäß einem oder mehreren der vorhergehenden Ansprüche, worin die Mischung von biologischer Herkunft (C) ausgewählt ist aus Sonnenblumenöl, Rapsöl, Canolaöl, Palmöl, Sojabohnenöl, Hanföl, Olivenöl, Leinsamenöl, Erdnussöl, Rizinusöl, Senföl, Kokosnussöl, Jatropha-Öl, Virola-Öl, Fettölen, die in der Pulpe von Pinienbäumen (Tall-Öl) enthalten sind, Speck, Schmalz, Talg, Milchfetten, rezyklierten Ölen oder Fetten der Nahrungsmittelindustrie, von sowohl tierischer als auch pflanzlicher Herkunft, Pflanzenölen oder Fetten, abgeleitet von Pflanzen ausgewählt durch genetische Manipulation, oder Mischungen davon.

16. Verfahren gemäß einem oder mehreren der vorhergehenden Ansprüche, worin der Bestandteil von biologischer Herkunft (B) erhalten wird mittels eines Verfahrens, umfassend einen Hydrodeoxygenierungsschritt, und gegebenenfalls einen Isomerisierungsschritt, wobei in dem Hydrodeoxygenierungsschritt die Mischung von biologischer Herkunft (C) hydrodeoxygeniert ist mit Wasserstoff in der Gegenwart eines Hydrodeoxygenierungskatalysatoren.

17. Verfahren gemäß Anspruch 16, worin die Katalysatoren einen Träger und einen oder mehrere Metalle, ausgewählt aus den Metallen der Gruppe VIII und Metallen der Gruppe VIB, enthalten.

18. Verfahren gemäß Anspruch 17, worin das Metall oder die Metalle ausgewählt sind aus Pd, Pt, Ni oder aus Metallpaaren Ni-Mo, Ni-W, Co-Mo und Co-W.

19. Verfahren gemäß Anspruch 18, worin die Katalysatoren des Typs Ni-Mo, Ni-W, Co-Mo und Co-W zuvor sulfidiert wurden.

20. Verfahren gemäß Anspruch 16, worin der Hydrodeoxygenierungsschritt ausgeführt wird bei einem Druck in einem Bereich von 25 bis 70 bar und einer Temperatur in einem Bereich von 240 bis 450 °C.

21. Verfahren gemäß Anspruch 20, worin der Hydrodeoxygenierunsschritt ausgeführt wird bei einem Druck in einem Bereich von 30 bis 50 bar und bei einer Temperatur in einem Bereich von 270 bis 430 °C.

22. Verfahren gemäß Anspruch 1, worin vor dem Hydrodeoxygenierungsschritt die Beladung von biologischer Herkunft behandelt wird, um den Gehalt an Alkali- und Erdalkalimetallen mittels Adsorption oder milden Säure-Wäschen zu entfernen.

23. Verfahren gemäß einem oder mehreren der vorhergehenden Ansprüche, worin der Bestandteil von biologischer Herkunft (B) erhalten wird mittels eines Verfahrens, umfassend eine Hydrodeoxygenierungsschritt und einen Isomerisierungsschritt, wobei der Isomerisierungsschritt bewirkt wird in der Gegenwart von Wasserstoff und einem Hydroisomerisierungskatalysator.

24. Verfahren gemäß Anspruch 23, worin der Katalysator ausgewählt ist aus Katalysatoren, enthaltend Zeolithe und/oder Metalle der Gruppe VIII und einen Träger.

25. Verfahren gemäß Anspruch 1 oder 24, worin in dem Hydroisomerisierungsschritt eine katalytische Zusammensetzung verwendet wird, umfassend:
a) einen Träger von saurer Natur, umfassend ein vollständig amorphes mikro-mesoporöses Silico-Alumina mit einem SiO₂/Al₂O₃-Molverhältnis in einem Bereich von 30 bis 500, einem Oberflächenbereich größer als 500 m²/g, einem Porenvolumen in einem Bereich von 0,3 bis 1,3 ml/g, einem durchschnittlichen Porendurchmesser geringer als 40 Ä,
b) eine metallische Komponente, umfassend ein oder mehrere Metalle der Gruppe VIII, gegebenenfalls vermischt mit einem oder mehreren Metallen der Gruppe VIB.

26. Verfahren gemäß Anspruch 25, worin der Träger von saurer Natur (a) der katalytischen Zusammensetzung, die in dem Hydroisomerisierungsschritt eingesetzt wird, ein Silico-Alumina umfasst, mit ein SiO₂/Al₂O₃-Molverhältnis in einem Bereich von 50 bis 300.

27. Verfahren gemäß Anspruch 25, worin der Träger von saurer Natur (a) der katalytischen Zusammensetzung, die in dem Hydroisomerisierungsschritt eingesetzt wird, ein Silico-Alumina umfasst, mit einer Porosität in einem Bereich von 0,3 bis 0,6 ml/g.

28. Verfahren gemäß Anspruch 25, worin das Metall oder die Metalle der Gruppe VIII ausgewählt sind aus Pt, Pd, Ni und Co.

29. Verfahren gemäß Anspruch 1, 23 oder 25, worin der Hydroisomerisierungsschritt ausgeführt wird bei einer Temperatur in einem Bereich von 250 bis 450 °C und bei einem Druck in einem Bereich von 25 bis 70 bar.

30. Verfahren gemäß Anspruch 29, worin der Hydroisomerisierungsschritt durchgeführt wird bei einer Temperatur in einem Bereich von 280 bis 380 °C und bei einem Druck in einem Bereich von 30 bis 50 bar.

31. Verfahren gemäß Anspruch 1, 23, 25 oder 29, worin der Hydroisomerisierungsschritt ausgeführt wird bei einer LHSV in einem Bereich von 0,5 bis 2 Stunden⁻¹ und mit einem H₂/HC-Verhältnis in einem Bereich von 200 bis 1000 NI/I.

32. Verwendung der Zusammensetzung erhalten in einem Verfahren gemäß einem oder mehreren der vorhergehenden Ansprüche als Dieselbrennstoff für Verbrennungsmaschinen oder als Brennstoff zur Wärmeerzeugung.

## Revendications

1. Procédé de préparation d'une composition d'hydrocarbures, qui comprend le fait de mélanger :
- de 20 % à 95 % en poids d'un composant (A) du type gazole, issu du mélange de distillats moyens dont le point d'ébullition est compris dans l'intervalle allant de 180 °C à 380 °C,
- de 1 % à 40 % en poids d'un composant (A1) du type essence, **caractérisé par** une température T95 inférieure à 250 °C (norme ASTM D86) et présentant une masse volumique comprise dans l'intervalle allant de 855 à 910 kg/m³,
- de 4 % à 60 % en poids d'un composant (B) du type hydrocarbure d'origine biologique,
ledit composant (B) du type hydrocarbure d'origine biologique étant produit à partir d'un mélange (C) d'origine biologique contenant des esters d'acides gras, en option avec un certain nombre d'acides gras libres, au moyen d'un procédé qui comprend :
(1) une étape d'hydrodésoxygénation du mélange d'origine biologique,
(2) et, en option, une étape d'hydroisomérisation du mélange obtenu à l'issue de l'étape (1),
étant entendu que, par comparaison avec une même composition ne contenant pas ledit composant (A1) du type essence, ladite composition d'hydrocarbures est **caractérisée par** une amélioration de la température limite de filtrabilité (TLF) qui varie de 0,2 °C à 5 °C en fonction de la concentration dudit composant (A1) du type essence, et une amélioration du point de trouble comprise dans l'intervalle allant de 0,2 °C à 5 °C en fonction de la concentration dudit composant (A1) du type essence,
et que ledit composant du type hydrocarbure d'origine biologique ainsi obtenu présente une masse volumique comprise dans l'intervalle allant de 750 à 800 kg/m³, une viscosité comprise dans l'intervalle allant de 2,00 à 4,00 cSt, un point de trouble compris dans l'intervalle allant de -20 °C à +5 °C, une teneur en soufre inférieure à 3 mg/kg, une teneur en azote inférieure à 3 mg/kg, un indice d'acide inférieur à 0,1 mg KOH/g, un intervalle de distillation, représenté par les températures d'ébullition de 10 % en volume et 90 % en volume dans la norme ASTM D86, allant de 240 °C à 300 °C, la température limite de filtrabilité (TLF) du composant (B) d'origine biologique étant, de préférence, comprise dans l'intervalle allant de -25 °C à +5 °C.

2. Procédé selon la revendication 1, dans lequel les distillats moyens sont des gazoles de distillation primaire, des gazoles de distillation sous vide, des gazoles de craquage thermique ou catalytique, des carburants issus d'un procédé de Fischer-Tropsch ou des carburants de synthèse.

3. Procédé selon la revendication 2, dans lequel le gazole de craquage catalytique est une coupe gazole désulfurée provenant d'un craquage catalytique en lit fluidisé (LCO [*Light cycle oil*])*.*

4. Procédé selon une ou plusieurs des revendications précédentes, dans lequel les coupes utilisées dans le composant diesel ont été soumises à un traitement d'hydrogénation.

5. Procédé selon la revendication 1, dans lequel l'essence est **caractérisée par** une température T95 inférieure à 240 °C.

6. Procédé selon la revendication 1 ou la revendication 5, dans lequel le composant du type essence présente un point de trouble (PT) inférieur à -40 °C.

7. Procédé selon la revendication 1, 5 ou 6, dans lequel le composant du type essence présente une teneur en composés aromatiques supérieure à 50 % en poids par rapport au poids total de l'essence.

8. Procédé selon une ou plusieurs des revendications précédentes, dans lequel l'essence employée est choisie parmi les essences issues de procédés catalytiques, les essences issues de procédés de reformage et les mélanges de telles essences.

9. Procédé selon la revendication 8, dans lequel l'essence est issue de procédés de craquage catalytique en lit fluidisé (FCC [*Fluid bed catalytic cracking*]).

10. Procédé selon la revendication 8 ou la revendication 9, dans lequel on utilise des essences lourdes de craquage catalytique en lit fluidisé (FCC), telles quelles ou après désulfuration, des essences lourdes de reformage ou des mélanges de telles essences.

11. Procédé selon la revendication 1, dans lequel on ajoute à ladite composition d'hydrocarbures des fluidifiants à froid, détergents, additifs améliorant le pouvoir lubrifiant, agents antimousse, additifs pro-cétane, agents antirouille, antioxydants, agents anti-usure et agents améliorant la conductivité.

12. Procédé selon la revendication 1, dans lequel les mélanges (C) d'origine biologique sont des mélanges d'origine végétale ou animale.

13. Procédé selon la revendication 1 ou la revendication 12, dans lequel les esters d'acides gras contenus dans les mélanges (C) sont des triglycérides d'acides gras, la chaîne hydrocarbonée des acides gras étant mono-insaturée ou polyinsaturée et comportant de 12 à 24 atomes de carbone.

14. Procédé selon la revendication 1, 12 ou 13, dans lequel le mélange d'origine biologique est choisi parmi les huiles végétales, les matières grasses végétales, les matières grasses animales, les huiles de poisson et les combinaisons de telles substances.

15. Procédé selon une ou plusieurs des revendications précédentes, dans lequel le mélange (C) d'origine biologique est choisi dans l'ensemble constitué par les substances suivantes : huile de tournesol, huile de colza, huile de colza du type canola, huile de palme, huile de soja, huile de chanvre, huile d'olive, huile de lin, huile d'arachide, huile de ricin, huile de moutarde, huile de coco, huile de Jatropha (médicinier), huile de Virola (muscadier), huiles grasses contenues dans la pulpe des pins (tallöl), lard, saindoux, suif, matières grasses de lait, huiles ou graisses recyclées de l'industrie agro-alimentaire, tant d'origine animale que végétale, huiles ou graisses végétales tirées de plantes sélectionnées par manipulation génétique, et les mélanges de telles substances.

16. Procédé selon une ou plusieurs des revendications précédentes, dans lequel le composant (B) d'origine biologique est produit au moyen d'un procédé comportant une étape d'hydrodésoxygénation et, en option, une étape d'isomérisation, étant entendu que, lors de l'étape d'hydrodésoxygénation, le mélange (C) d'origine biologique est hydrodésoxygéné avec de l'hydrogène en présence d'un catalyseur d'hydrodésoxygénation.

17. Procédé selon la revendication 16, dans lequel les catalyseurs comportent un support et un métal ou plusieurs métaux choisi(s) dans l'ensemble constitué par les métaux du groupe VIII et les métaux du groupe VIB.

18. Procédé selon la revendication 17, dans lequel le métal ou les métaux est ou sont choisi(s) dans l'ensemble constitué par les métaux Pd, Pt, Ni et les couples de métaux Ni-Mo, Ni-W, Co-Mo et Co-W.

19. Procédé selon la revendication 18, dans lequel les catalyseurs du type Ni-Mo, Ni-W, Co-Mo et Co-W ont été préalablement sulfurés.

20. Procédé selon la revendication 16, dans lequel l'étape d'hydrodésoxygénation est réalisée sous une pression variant de 25 à 70 bar, et à une température comprise dans l'intervalle allant de 240 °C à 450 °C.

21. Procédé selon la revendication 20, dans lequel l'étape d'hydrodésoxygénation est réalisée sous une pression variant de 30 à 50 bar, et à une température comprise dans l'intervalle allant de 270 °C à 430 °C.

22. Procédé selon la revendication 1, dans lequel, avant l'étape d'hydrodésoxygénation, on traite la charge d'origine biologique par adsorption ou lavages doux à l'acide afin d'éliminer les métaux alcalins et alcalino-terreux qu'elle contient.

23. Procédé selon une ou plusieurs des revendications précédentes, dans lequel le composant (B) d'origine biologique est produit au moyen d'un procédé comportant une étape d'hydrodésoxygénation et une étape d'isomérisation, étant entendu que l'étape d'isomérisation est effectuée en présence d'hydrogène et d'un catalyseur d'hydroisomérisation.

24. Procédé selon la revendication 23, dans lequel le catalyseur est choisi parmi les catalyseurs qui comportent des zéolithes et/ou des métaux du groupe VIII, et un support.

25. Procédé selon la revendication 1 ou la revendication 24, dans lequel, lors de l'étape d'hydroisomérisation, on utilise une composition catalytique qui comprend :
(a) un support de nature acide, comprenant une silico-alumine micro-mésoporeuse entièrement amorphe dont le rapport molaire SiO₂/Al₂O₃ est compris dans l'intervalle allant de 30 à 500, la surface spécifique est supérieure à 500 m²/g, le volume poreux est compris dans l'intervalle allant de 0,3 à 1,3 ml/g, et le diamètre de pore moyen est inférieur à 40 Å,
(b) un composant métallique comprenant un métal ou plusieurs métaux du groupe VIII, en option combiné(s) à un métal ou plusieurs métaux du groupe VIB.

26. Procédé selon la revendication 25, dans lequel le support (a) de nature acide de la composition catalytique utilisée lors de l'étape d'hydroisomérisation comprend une silico-alumine dont le rapport molaire SiO₂/Al₂O₃ est compris dans l'intervalle allant de 50 à 300.

27. Procédé selon la revendication 25, dans lequel le support (a) de nature acide de la composition catalytique utilisée lors de l'étape d'hydroisomérisation comprend une silico-alumine dont la porosité est comprise dans l'intervalle allant de 0,3 à 0,6 ml/g.

28. Procédé selon la revendication 25, dans lequel le métal ou les métaux du groupe VIII est ou sont choisi(s) dans l'ensemble constitué par les métaux Pt, Pd, Ni et Co.

29. Procédé selon la revendication 1, 23 ou 25, dans lequel l'étape d'hydroisomérisation est réalisée à une température comprise dans l'intervalle allant de 250 °C à 450 °C, et sous une pression de 25 à 70 bar.

30. Procédé selon la revendication 29, dans lequel l'étape d'hydroisomérisation est réalisée à une température comprise dans l'intervalle allant de 280 °C à 380 °C, et sous une pression de 30 à 50 bar.

31. Procédé selon la revendication 1, 23, 25 ou 29, dans lequel l'étape d'hydroisomérisation est réalisée à une vitesse volumique horaire (VVH) comprise dans l'intervalle allant de 0,5 à 2 h⁻¹ et avec un rapport H₂/hydrocarbure (H₂/HC) compris dans l'intervalle allant de 200 à 1000 NI/I.

32. Utilisation de la composition produite au moyen d'un procédé selon une ou plusieurs des revendications précédentes, comme carburant pour moteur diesel ou comme combustible de chauffage.
